# EUROPÄISCHE PATENTSCHRIFT

(11) **EP 3 372 735 B1**
(45) Veröffentlichungstag und Bekanntmachung des Hinweises auf die Patenterteilung: **06.10.2021**
(21) Anmeldenummer: 18157329.6
(22) Anmeldetag: 19.02.2018
(51) Int. Cl.: E03B 7/04, F16L 59/14

(54) **THERMISCHE KOPPLUNG VON KALTWASSERLEITUNGEN AN MASSIVE BAUTEILE**
THERMAL COUPLING OF COLD WATER LINES TO SOLID COMPONENTS
COUPLAGE THERMIQUE DE CONDUITES D'EAU FROIDE À DES COMPOSANTS MASSIFS

(30) Priorität: 09.03.2017 DE 202017101345 U
(43) Veröffentlichungstag der Anmeldung: 12.09.2018
(73) Patentinhaber: Gebr. Kemper GmbH + Co. KG Metallwerke, 57462 Olpe (DE)
(72) Erfinder: Petzolt, Ulrich, 51598 Friesenhagen (DE); Schütze, Dirk, 14959 Trebbin (DE)
(74) Vertreter: Grünecker Patent- und Rechtsanwälte PartG mbB

(56) Entgegenhaltungen:
- DE-A1-102009 055 441
- DE-U1-202010 009 284
- DE-U1-202010 009 284
- DE-U1-202015 104 011
- US-B1- 6 283 382

## Beschreibung

Die vorliegende Erfindung betrifft ein Wasserleitungssystem mit zumindest einer Kaltwasserleitung, welches mit einer Dämmung zur thermischen Entkopplung bzw. Isolierung umgeben ist. Solche Wasserleitungssysteme mit Leitungen, die mit einer Dämmung versehen sind, sind allgemein bekannt.

So offenbart z. B. die DE 20 2015 104 411 U1 ein System entsprechend dem Oberbegriff von Anspruch 1.

Die Dämmung ist vorgesehen, um den Austausch von Wärmeenergie zwischen dem in der Leitung fließenden Wasser und der Umgebung möglichst zu reduzieren. Üblicherweise wird eine solche Wasserleitung an einem tragfähigen Bauteil (z. B. massive Schachtwand, Rohdecke), befestigt, wobei die Wasserleitung dann vollumfänglich mit der thermischen Dämmung umgeben ist.

Aufgrund der umweltpolitischen Vorgaben zur Energieeinsparung, dem nachhaltigen Umgang mit dem Verbrauch von Wasser als auch der Forderung zur Ressourcenschonung von Trinkwasser, hat sich die vorliegende Erfindung zum Ziel gesetzt die Mediumtemperatur des in dem Wasserleitungssystem fließenden kalten Wassers, auf ein aus trinkwasserhygienischer Sicht unkritisches Temperaturniveau zu reduzieren. Die maximal zulässige obere Temperaturgrenze für kaltes Trinkwasser liegt laut dem Regelwerk für Trinkwasser bei 25°C. Die Absenkung der Mediumtemperatur des Wassers in der Wasserleitung -kalt- soll durch Abführen von Wärmeenergie aus der Wasserleitung-kalt- in das tragfähige Bauteil erfolgen. Dies ist physikalisch gegeben, da sich das tragfähige Bauteil i.d.R. auf einem niedrigeren Temperaturniveau als das sich in der Leitung befindliche kalte Wasser befindet.

Zur Lösung des Problems schlägt die vorliegende Erfindung ein Wasserleitungssystem gemäß Anspruch 1 vor. Dieses zeichnet sich insbesondere dadurch aus, dass eine Umfangswandung der Kaltwasserleitung zumindest abschnittsweise in thermischen Kontakt mit einem massiven Bauteil mit hoher Wärmekapazität steht. Das massive Bauteil kann z. B. mittels des Dämmungssystem, insbesondere über eine thermisch leitfähige Innenschale, welche von der Dämmung umgeben ist, an die Kaltwasserleitung gekoppelt werden. Die Dämmung kann auch derart ausgebildet sein, dass zumindest ein Umfangswandlungsabschnitt der Kaltwasserleitung in thermischem Kontakt mit dem massiven Bauteil mit hoher Wärmekapazität steht. Dadurch wird ein Wärmeaustausch zwischen dem in der Kaltwasserleitung fließenden Wasser und dem Bauteil hoher Wärmekapazität erreicht. Das Bauteil hoher Wärmekapazität hat vorzugsweise eine im Vergleich zu dem in die Kaltwasserleitung einströmenden Wasser niedrigere Temperaturen. Aufgrund der hohen thermischen Masse des Bauteils hoher Wärmekapazität fließt demnach Wärme von dem in der Kaltwasserleitung fließenden Wasser zu dem massiven Bauteil hoher Wärmekapazität. Als massives Bauteil kann jedes Element gesehen werden, welches mittelbar z. B. über die thermisch leitfähige Innenschale des Dämmungssystems oder unmittelbar mit der Umfangswandung der Leitung in thermischem Kontakt steht und eine gewisse thermische Masse aufweist, sodass ein Wärmeenergiefluss von dem in der Kaltwasserleitung fließenden Wasser zu dem massiven Bauteil keine bzw. nur eine geringe Temperaturerhöhung in dem massiven Bauteil hoher Wärmekapazität nach sich zieht.

Dadurch, dass die Kaltwasserleitung mit ihrer Umfangswandung z. B. über die thermisch leitfähige Innenschale des Dämmungssystems mit dem massiven Bauteil in thermischen Kontakt steht, kann eine zusätzliche Kühlung des Wassers erreicht werden. Es hat sich gezeigt, dass dadurch insgesamt eine Energieersparnis eintritt, da es möglich ist das kalte Wasser somit ohne zusätzlichen Energieaufwand abzukühlen bzw. auf ein niedrigeres Temperaturniveau zu bringen.

Gemäß einer Weiterbildung der Erfindung kann das massive Bauteil hoher Wärmekapazität zumindest eines ausgewählt aus der Gruppe der folgenden Elemente sein: Gebäudewand, Gebäudeboden, Geschossdecke, Gebäudedecke, Schachtwand. Das erfindungsgemäße Wasserleitungssystem ist vorzugsweise ein Wasserleitungssystem in einem Gebäude, wie etwa einem Krankenhaus, einem Hotel, einem Wohnheim oder Gebäuden im Wohnungsbaueinem Industriegebäude oder einem Gebäudekomplex. Die Kaltwasserleitung kann vorteilhafterweise durch das aus der thermisch leitfähigen Innenschale, welche von der Dämmung umgeben ist, gebildete Dämmungssystem an den Wänden bzw. Böden oder Decken befestigt werden, welche das zuvor beschriebene massive Bauteil mit hoher Wärmekapazität bilden. Soweit ein solches Dämmsystem verwendet wird, bildet dieses z. B. gleichzeitig ein Befestigungsmittel aus einzelnen Segmenten, über welche die Wasserleitung an der entsprechenden Wand bzw. Decke befestigbar ist. Insbesondere können in dem Gebäude auch Schächte vorgesehen sein, durch welche entsprechenden Leitungen verlaufen. Demnach kann auch eine Schachtwand das massive Bauteil hoher Wärmekapazität bilden. Auch ein einzelner im Erdreich eingelassenen Schacht, wie z. B. ein Revisionsschacht, kann das massive Bauteil hoher Wärmekapazität bilden. Die zuvor genannten Elemente können auch in Kombination das massive Bauteil bilden.

Die Gebäudewand, der Gebäudeboden, die Gebäudedecke bzw. die Schachtwand weisen z. B. durch deren thermischen Kontakt zum Erdreich oder die angrenzende Lufttemperatur z. B. eines Nebenraums eine niedrigere Temperatur als das kalte, in der Kaltwasserleitung fließende Wasser auf. Somit kommt es zu einer Wärmeübertragung zwischen dem Bauteil und dem durch die Kaltwasserleitung fließenden Wasser.

Gemäß einer Weiterbildung der Erfindung kann das massive Bauteil aus einem Material ausgewählt aus der Gruppe Beton, Kalksandstein, Vollziegel sein. Insbesondere ist jeder massive Baustoff mit einer hohen Dichte möglich. Da Keller bzw. ganze Gebäudeteile oftmals aus Beton gegossen werden, kann das massive Bauteil auf einfache Weise bereitgestellt werden. Beton hat eine hohe Wärmekapazität und ist daher gut zur Wärmeübertragung für das in der Kaltwasserleitung fließende Wasser geeignet.

Erfindungsgemäß ist zwischen der Umfangswandung der Kaltwasserleitung und dem massiven Bauteil ein thermisch leitfähiges Element vorgesehen.

Zwar kann die Umfangswandung der Kaltwasserleitung, weil beispielsweise die Dämmung an einem Bereich der Umfangswandung der Leitung eine Ausnehmung aufweist bzw. unterbrochen ist, direkt und unmittelbar mit dem massiven Bauteil hoher Wärmekapazität in thermischem Kontakt stehen. Da die Kaltwasserleitung jedoch mit einem gewissen Abstand von diesem Bauteil montiert sein kann, ist es vorteilhaft ein thermisch leitfähiges Element vorzusehen. Dieses thermisch leitfähige Element ist erfindungsgemäß nach Art einer Innenschale, welche innen an der Dämmung vorgesehen ist, ausgebildet. Die Innenschale bildet mit der Dämmung, das Dämmsystem, wobei die Dämmung ein Außenschale bildet. Über die Außenschale wird die Wasserleitung von der Umgebung thermisch getrennt und ist vorzugsweise thermisch lediglich an das massive Bauteil angebunden.

Dieses thermisch leitfähige Element kann ein separat von dem massiven Bauteil hoher Wärmekapazität und der Umfangswandung der Wasserleitung ausgebildetes Element, z. B. das weiter unten beschriebene die Erfindung verwirklichende Kompositbauteil sein. Es kann aus dem gleichen Material wie die Kaltwasserleitung bzw. das Bauteil hoher Wärmekapazität sein oder es kann auch als einem von der Kaltwasserleitung bzw. dem Bauteil hoher Wärmekapazität unterschiedlichen Insbesondere kann ein thermisch leitfähiger Wertstoff verwendet werden, der konturabbildend an der Umfangswandung der Kaltwasserleitung und/oder an der Oberfläche des massiven Bauteils hoher Wärmekapazität anliegt. Soweit bei dem thermisch leitfähigen Element auf ein separates Bauteil, separat von dem massiven Bauteil hoher Wärmekapazität und der Umfangswandung abgestellt ist, schließt dies eine verlierfeste Verbindung mit der Dämmung bzw. Dämmschale nicht aus.

Erfindungsgemäß wird das thermisch leitfähige Element durch eine Innenschale gebildet, welche die Kaltwasserleitung umfänglich ganz oder teilweise umgibt und zwischen der Dämmung und der Umfangswandung der Kaltwasserleitung vorgesehen ist. Die Kaltwasserleitung kann so durch das thermisch leitfähige Element, welches nach einer Art Innenschale ausgebildet ist, hindurch verlaufen und kann beispielsweise vollständig über das thermisch leitfähige Element von der Dämmung separiert sein. Die Dämmung selber hingegen stellt sicher, dass an den Stellen, an denen kein Wärmeübertrag zwischen dem massiven Bauteil hoher Wärmekapazität und der Umfangwandung der Kaltwasserleitung stattfindet, der Wärmeübertrag deutlich reduziert wird. So kann beispielsweise ein Wärmeübertrag auf der Seite der Kaltwasserleitung, die mit der erhöhten Umgebungslufttemperatur in Verbindung steht, verhindert werden, die dem massiven Bauteil hoher Wärmekapazität gegenüberliegt.

Erfindungsgemäß bildet die Innenschale ein einheitliches Element mit der Dämmung.

Die Dämmung bildet eine Außenschale, welche einen Ausschnitt aufweist, durch welchen das thermisch leitfähige Element mit dem massiven Bauteil in thermischem Kontakt steht. Vorzugsweise ist die Außenschale, die die Dämmung bildet, mit der Innenschale, die durch das thermisch leitfähige Element gebildet wird, als Kompositschale aufgebaut, die für sich auch mehrteilig aus mehreren Kompositschalenelementen aufgebaut sein kann. Eine Kompositschale ist ein Element aus Dämmung und thermisch leitfähigem Element, wobei diese beiden Elemente z. B. durch Kleben miteinander verbunden sind. Hierdurch ist es besonders einfach, die Dämmung mitsamt der thermischen Isolierung an der Kaltwasserleitung zu montieren.

Gemäß einer Weiterbildung der Erfindung kann das thermisch leitfähige Element mittels eines thermisch leitfähigen Verbindungsmaterials an dem massiven Bauteil befestigt sein. Für einen besseren Wärmeübertrag kann demnach ein thermisch leitfähiges Verbindungsmaterial vorgesehen sein, sodass ein engerer Kontakt zwischen dem massiven Bauteil hoher Wärmekapazität und dem thermisch leitfähigen Element hergestellt wird. Als Verbindungsmaterial kann jedes Material verwendet werden, mit welchem das thermisch leitfähige Element mit dem Bauteil hoher Wärmekapazität verbunden werden kann. Durch eine solche Verbindung ist es auch möglich, die gesamte Kaltwasserleitung mitsamt dem thermisch leitfähigen Element und der Dämmung in einem Arbeitsschritt an dem massiven Bauteil hoher Wärmekapazität anzubringen. Es kann auch vorteilhaft sein, dass zunächst einzelne Bauteile aus einem Kaltwasserleitungsstück mit Dämmung und thermischer Isolierung bereitgestellt werden und diese Bauteile zusammen gefügt werden, und miteinander verbunden werden um das Wasserleitungssystem zu bilden. So ist eine besonders einfache Montage möglich.

Gemäß einer Weiterbildung der Erfindung kann das leitfähige Verbindungsmaterial eine Klebeschicht sein. Thermisch leitfähige Kleber sind insbesondere vorteilhaft.

Gemäß einer Weiterbildung der Erfindung kann die Kaltwasserleitung vollumfänglich umhüllt sein. Eine vollumfängliche Umhüllung der Kaltwasserleitung wird durch die Kombination des thermisch leitfähigen Elementes mit der Dämmung gewährleistet. Die Umfangswandung der Kaltwasserleitung selbst ist von außen dann nicht zugänglich und zumindest von einem der Elemente; thermisch leitfähiges Element bzw. Dämmung; abgeschirmt. Insbesondere wird hierdurch ein guter Wärmeübertrag in Verbindung mit einer thermischen Abschirmung zu anderen Bereichen gewährleistet.

Gemäß einer Weiterbildung der Erfindung kann die Außenschale derart ausgebildet sein, dass ein Gehäuse gebildet wird, welches an dem massiven Bauteil angebracht ist und welches das thermisch leitfähige Element vollständig einhaust. Wenn die Außenschale das thermisch leitfähige Element vollständig einhaust, wenn diese an dem massiven Bauteil angebracht ist, wird gewährleistet, dass der Wärmeübertrag lediglich über das massive Bauteil geschieht und in allen anderen Bereichen ein Wärmeaustausch verhindert wird.

Gemäß einer Weiterbildung der Erfindung kann das massive Bauteil eine Innenecke aufweisen, in welcher die Kaltwasserleitung angebracht ist und es können beide Innenseiten der Innenecke jeweils in thermischem Kontakt mit der Kaltwasserleitung stehen. Hierdurch steht ein größerer Oberflächenbereich von dem massiven Bauteil zu Verfügung um einen Wärmeaustausch zu gewährleisten.

Gemäß einer Weiterbildung der Erfindung kann das Gehäuse durch eine Halbschale, eine Eckschale oder eine Platte gebildet werden, welches die Kaltwasserleitung und das thermisch leitfähige Element umgibt, wobei die Begrenzungsränder des Gehäuses flächig an entsprechenden Wänden des massiven Bauteils anliegen. Die Begrenzungsränder des Gehäuses nehmen das thermisch leitfähige Element in sich auf und verhindern, dass ein Wärmeübertrag über andere Bereiche, als über das massive Bauteil mit hoher Wärmekapazität erfolgt.

Gemäß einer Weiterbildung der Erfindung kann eine Warmwasserleitung, welche thermisch isoliert von dem massiven Bauteil, insbesondere an diesem befestigt ist, vorgesehen sein. Bei einem solchen Wasserleitungssystem, wie es beispielsweise in Einfamilienhäusern, Industriegebäuden oder Gebäudekomplexen vorgesehen ist, ist oftmals neben einer Kaltwasserleitung für Trink- und Brauchwasser auch eine Warmwasserleitung für Trink- und Brauchwasser vorgesehen. Diese beiden Leitungen können nebeneinander verlaufend angebracht werden. Um einen Wärmeaustausch zwischen dem warmen in der Warmwasserleitung fließenden Wasser und dem massiven Bauteil auszuschließen, wird die Warmwasserleitung thermisch isoliert von dem massiven Bauteil an diesem befestigt.

Auch wenn die vorliegende Erfindung für eine Kaltwasserleitung beschrieben worden ist, die im thermischen Kontakt mit dem massiven Bauteil hoher Wärmekapazität steht, kann auch eine Warmwasserleitung mit dem massiven Bauteil mit hoher Wärmekapazität in thermischem Kontakt stehen. In diesem Fall ist es zu bevorzugen, dass soweit eine Kaltwasserleitung vorgesehen ist, diese dann thermisch isoliert von dem massiven Bauteil vorgesehen ist.

Gemäß einer Weiterbildung der Erfindung kann die thermische Isolierung durch eine Dämmschale gewährleistet sein, welche die Warmwasserleitung vollumfänglich umgibt. Als solche Dämmschale kann z. B. ein Kunststoffschaumrohr dienen, das an seiner Längsseite einen durchgehenden Schnitt aufweist und flexibel ist, sodass die Dämmschale über die Warmwasserleitung gezogen werden kann. Solche Dämmschalen sind im Stand der Technik hinlänglich bekannt.

Gemäß einer Weiterbildung der Erfindung können die Warmwasserleitung und die Kaltwasserleitung parallel zueinander und nebeneinander verlaufend angeordnet sein.

Gemäß einer Weiterbildung der Erfindung kann die Warm- und oder Kaltwasserleitung einen Stockwerks und/oder Steigrohrstrang eines Trink- und oder Brauchwassersystems eines Gebäudes bilden.

Gemäß eines nebengeordneten Aspektes der Erfindung wird ein Kompositbauteil zum Einhausen einer Wasserleitung bereitgestellt. Dieses Kompositbauteil weist eine Dämmschale aus einem thermisch isolierendem Material und einem thermisch leitfähigen Element auf, wobei das thermisch leitfähige Element konfiguriert ist, um mit einem Umfangswandungsabschnitt der Wasserleitung in thermischen Kontakt zu stehen und einen Außenumfangsabschnitt des Kompositbauteils bildet. Dieses Kompositbauteil kann die zuvor für das Wasserleitungssystem in Bezug auf die Dämmung zur thermischen Isolierung und/oder in Bezug auf das thermisch leitfähige Element beschriebenen Ausgestaltungen aufweisen. Dieses Kompositbauteil kann auch unabhängig von dem gesamten Wasserleitungssystem für sich die Erfindung bilden.

Gemäß einer Weiterbildung des Kompositbauteils kann dieses in seiner Querschnittsrichtung eine im Wesentlichen zylindrische Form aufweisen. Die Wasserleitung kann mit deren Längsrichtung durch das Kompositbauteil hindurch verlaufen. Wenn das Kompositbauteil in seiner Querschnittsrichtung eine im Wesentlichen zylindrische Form aufweist, ist es einfach herzustellen, z. B. durch Extrusion/Coextrusion. Die Querschnittsrichtung ist vorzugsweise die Richtung quer zur Wasserleitung.

Erfindungsgemäß weist das Kompositbauteil zumindest ein erstes mit einem massiven Bauteil hoher Wärmekapazität kontaktierbares Element und ein zweites Element auf, welche die Wasserleitung zwischen sich aufnehmen. Wenn das Kompositbauteil zumindest derart zweigeteilt ist, dass es die Wasserleitung in sich aufnehmen kann, wird eine einfache Montage der Wasserleitung in dem Bauteil gewährleistet.

Erfindungsgemäß enthält zumindest eines des ersten Elementes und/oder des zweiten Elementes zumindest einen Teil der Dämmschale und einen Teil des thermisch leitfähigen Elementes und bildet ein Kompositelement. Das erste Element kann z. B. mit einem Klebematerial an einem massiven Bauteil mit einer hohen Wärmekapazität montiert werden. Danach kann die Wasserleitung darauf verlegt werden und mit dem zweiten Element eingehaust werden. Vorteilhafterweise kann zumindest das zweite Element das Kompositelement aus Dämmschale und thermisch leitfähigem Element sein.

Gemäß einer Weiterbildung des Kompositbauteils kann das thermisch leitfähige Element die Wasserleitung konturabbildend in sich aufnehmen. Dieses gewährleistet einen guten Wärmeübertrag.

Gemäß einer Weiterbildung des Kompositbauteils kann eine Klebeschicht aus einem thermisch leitfähigen Material auf dem Außenumfangsabschnitt des Kompositbauteils vorgesehen sein. Mittels dieser Klebeschicht kann das Kompositbauteil z. B. an einer Wand bzw. dem massiven Bauteil mit hoher Wärmekapazität montiert werden.

Weitere Vorteile und Einzelheiten der vorliegenden Erfindung ergeben sich aus der nachfolgenden Beschreibung von Ausführungsbeispielen in Verbindung mit der Zeichnung. In dieser zeigen:
- Fig. 1A: ein erstes Ausführungsbeispiel eines erfindungsgemäßen Wasserleitungssystems;
- Fig. 1B: einen Ausschnitt des Wasserleitungssystems aus Fig. 1A, in dem der Bereich dargestellt ist, in dem die Kaltwasserleitung an das massive Bauteil hoher Wärmekapazität gekoppelt ist;
- Fig. 2A: ein zweites Ausführungsbeispiel eines erfindungsgemäßen Wasserleistungssystems und
- Fig. 2B: einen Ausschnitt des Wasserleitungssystems aus Fig. 2A, in dem der Bereich dargestellt ist, in dem die Kaltwasserleitung an das massive Bauteil hoher Wärmekapazität gekoppelt ist.

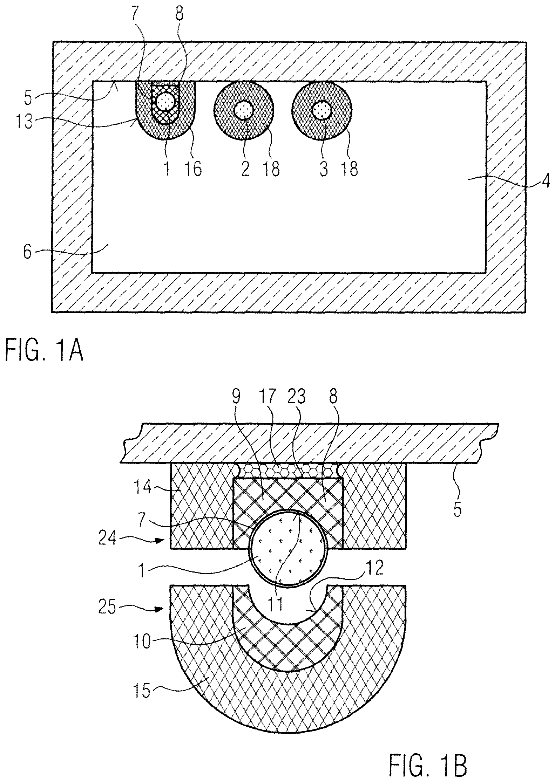

In Fig. 1A ist eine Querschnittansicht durch Wasserleitungen eines Wasserleitungssystems zu sehen. Vorliegend ist eine Kaltwasserleitung 1, eine Warmwasserleitung 2 sowie eine Warmwasserzirkulationsleitung 3 vorgesehen, welche in Längsrichtung nebeneinander verlaufend in einem Schacht 4 montiert sind. Die Kaltwasserleitung 1 führt beispielsweise kaltes Wasser zu einem oder mehreren Verbrauchern in einem Gebäude, wie z. B. einem Krankenhaus, einem Wohnheim, einem Hotel, einem Industriegebäude, einem Gebäudekomplex oder im Wohnungsbau. Die Kaltwasserleitung kann einen Stockwerks- oder Steigrohrstrang oder eine Verteilleitung bilden, wobei die Verteilleitung einzelne Abschnitte der Steigrohrstränge mit dem Hausanschluss oder der Warmwasserbereitung verbindet, der Steigrohrstrang die einzelnen Etagen eines Gebäudes verbindet und der Stockwerksstrang innerhalb eines Stockwerks das kalte Wasser zu den entsprechenden Verbrauchern führt. Über die Warmwasserleitung 2 wird entsprechend warmes Wasser zu einem oder mehreren Verbrauchern geführt. In dem Ausführungsbeispiel sind die Warmwasserleitung 2 und die Warmwasserzirkulationsleitung 3 abgebildet. Es können auch nur eine der beiden Leitungen oder weitere warmgehende Leitungen vorgesehen sein. Eine Warmwasserzirkulationsleitung ist eine Leitung, in der das warme Wasser ständig zirkuliert. Soweit eine Warmwasserleitung vorgesehen ist, in der das warme Wasser nicht zirkuliert (dies kann z. B. der Fall sein wenn das Rohrleitungsvolumen einer Warmwasser-Einzelleitung kleiner als 3 Liter ist), kann diese beispielsweise an einen Durchflusserwärmer angeschlossen sein und das Wasser wird lediglich bei unmittelbarer Entnahme erwärmt. Ein Beispiel eines solches Durchflusserwärmers ist der in der Europäischen Patentanmeldung mit der Anmeldenummer 16 170 441.6 und dem Deutschen Gebrauchsmuster mit dem Eintragungsaktenzeichen 20 2015 003 756 beschriebene Plattenwärmetauscher, der durch diesen Verweis in den Offenbarungsgehalt dieser Anmeldung einbezogen wird.

Der Schacht 4 kann ein Schacht innerhalb eines Gebäudes oder auch jeglicher andere bekannte Schacht, beispielsweise ein Revisionsschaft bzw. ein im Erdreich verlaufender Schacht, sein. Dieser Schacht 4 bildet vorliegend ein massives Bauteil hoher Wärmekapazität. Die Kaltwasserleitung 1 steht im thermischen Kontakt mit dem Schacht 4, konkret mit einer Innenwandung 5 des Schachts 4. Da der Schacht 4 eine hohe Wärmekapazität hat und insbesondere dann, wenn er im Erdreich verlaufend oder an Räume grenzend vorgesehen ist, oder zumindest thermisch mit diesem verbunden (z. B. wenn dieser als Gebäudeschacht ausgebildet ist) ist, die eine niedrigere Temperatur als das in die Kaltwasserleitung 1 einströmende kalte Wasser haben, wird die Kaltwasserleitung 1 mittels des massiven Bauteils zusätzlich gekühlt.

Sollte das massive Bauteil mit hoher Wärmekapazität eine höhere Temperatur als das durch die Wasserleitung fließende Wasser haben, kann ebenfalls auch eine Erwärmung desselben erfolgen. Obwohl die vorliegende Erfindung für einen thermischen Kontakt zwischen Kaltwasserleitung und dem massiven Bauteil hoher Wärmekapazität beschrieben ist, gilt entsprechendes auch, wenn eine Warmwasserleitung, welche mit einem massiven Bauteil hoher Wärmekapazität in Kontakt steht. Jedenfalls wird thermische Energie zwischen dem in der entsprechenden Leitung fließenden Wasser und dem massiven Bauteil hoher Wärmekapazität ausgetauscht. So kann Energie, die zum Kühlen bzw. Erwärmen nötig ist, eingespart werden. Auch wenn im vorliegenden Fall der Schacht 4 als Beispiel eines Bauteils hoher Wärmekapazität dient, kann ein solches Bauteil auch durch jegliche Gebäudewand, eine Gebäudedecke oder Gebäudeboden gebildet werden.

Bei der Verwirklichung der Erfindung in einem Schacht 4 ist es insbesondere vorteilhaft, eine thermische Anbindung der Kaltwasserleitung mit dessen Schachtwand vorzusehen, da sich innerhalb des in dem Schacht gebildeten Hohlraums 6 oftmals Wärme akkumuliert. Dies ist insbesondere der Fall, wenn sich durch diesen auch die Warmwasserleitung 2 bzw. die Warmwasserzirkulationsleitung 3 erstrecken. Durch die thermischen Verbindungen der Kaltwasserleitung mit dem massiven Bauteil hoher Wärmekapazität wird demnach eine gewisse Kühlung erreicht.

Dadurch, dass die Kaltwasserleitung mit ihrer Umfangswandung mit dem massiven Bauteil in thermischen Kontakt steht, kann das in dem Wasserleitungssystem fließenden kalten Wassers, auf ein aus trinkwasserhygienischer Sicht unkritisches Temperaturniveau reduziert werden. Die maximal zulässige obere Temperaturgrenze für kaltes Trinkwasser liegt laut dem Regelwerk für Trinkwasser bei 25°C. Die Absenkung der Mediumtemperatur des Wassers in der Wasserleitung -kalt- kann durch Abführen von Wärmeenergie aus der Wasserleitung-kalt- in das tragfähige Bauteil erfolgen. Dies ist in der Regel möglich, da sich das tragfähige Bauteil i.d.R. auf einem niedrigeren Temperaturniveau als das in der Leitung geführte kalte Wasser befindet.

Im vorliegenden Ausführungsbeispiel aus Fig. 1A steht eine Umfangswandung 7 der Kaltwasserleitung 1 nicht im unmittelbaren Kontakt mit der Innenwandung 5 des Schachts 4, sondern unter Zwischenlage eines thermisch leitfähigen Elements 8, welches zumindest zwischen der Umfangswandung 7 der Kaltwasserleitung 1 und der Innenwandung 5 des Schachts 4 platziert ist. Im vorliegenden Fall umgibt das thermisch leitfähige Element 8 die Kaltwasserleitung 1 vollumfänglich, sodass die Kaltwasserleitung 1 in dem thermisch leitfähigen Element 8 eingebettet ist. Das thermisch leitfähige Element 8 ist im vorliegenden Fall als zweiteiliges Schalenelement mit einer ersten Teilschale 9 und einer zweiten Teilschale 10 vorgesehen. Zwischen den beiden Teilschalen 9, 10 wird die Kaltwasserleitung 1 gehalten. Die entsprechenden Teilschalen 9, 10 weisen jeweils eine Ausnehmung 11, 12 auf, deren Kontur der Außenkontur der Umfangswandung 7 der Kaltwasserleitung 1 entspricht. Dies gewährleistet einen besonders effizienten Wärmeaustausch. Es ist nicht notwendigerweise der Fall, dass, wie in dem vorliegenden Ausführungsbeispiel der Fall, das thermisch leitfähige Element 8 die Kaltwasserleitung vollumfänglich umgibt, sondern es reicht aus, dass zumindest zwischen der Umfangswandung 7 der Kaltwasserleitung 1 und der Innenwandung 5 des Schachtes 4 ein entsprechender Bereich aus thermisch leitfähigem Material vorgesehen ist.

Bei der Montage kann beispielsweise zuerst die erste Teilschale 9 an der Innenwandung 5 befestigt werden, danach die Kaltwasserleitung 1 in die entsprechende Ausnehmung 11 der ersten Teilschale 9 eingelegt werden und dann die zweite Teilschale 10 mit der ersten Teilschale 9 verbunden werden, sodass die in Figur 1A dargestellte Konfiguration erhalten wird.

Im vorliegenden Fall ist als Dämmung ein zweiteiliges Dämmschalenelement 13 vorgesehen, mit einer ersten Dämmschale 14 und einer zweiten Dämmschale 15. Die beiden Dämmschalen 14, 15 ergeben das Dämmschalenelement 13, welches das thermisch leitfähige Element 8 vollständig in sich aufnimmt, so dass mit Ausnahme zur Kontaktfläche mit der Innenwandung 5 des Schachts 4 kein Bereich freigelassen wird, in dem das thermisch leitfähige Element mit der Umgebung in Kontakt steht. Das Dämmschalenelement 13 hat einen U-förmigen Querschnitt. Es ist nicht rotationssymmetrisch ausgebildet.

Vorliegend ist die jeweilige erste Dämmschale 14 und zweite Dämmschale 15 ein einziges Teil, ein sogenanntes Kompositelement, einheitlich mit der jeweiligen ersten Teilschale 9 bzw. zweiten Teilschale 10 des thermisch leitfähigen Elements 8 ausgebildet. Dies kann beispielsweise dadurch erreicht werden, dass die entsprechende erste Teilschale 9 mit der ersten Dämmschale 14 bzw. zweite Teilschale 10 mit der zweiten Dämmschale 15 z. B. durch Kleben verbunden ist. Somit müssen im vorliegenden Fall zur Anbringung sowohl der Dämmung als auch des thermisch leitfähigen Elements nur zwei Kompositteilschalen, nämlich eine erste Kompositteilschale aus der ersten Dämmschale 14 und der ersten Teilschale 9 und eine zweite Kompositteilschale aus der zweiten Dämmschale 15 und der zweiten Teilschale 10 angebracht werden.

Die Kompositelemente bilden das Dämmsystem. Vorliegend bilden zwei Kompositschalenelemente ein Dämmsystemelement. Mehrere Dämmsystemelemente werden z. B. in Längsrichtung hintereinander an der Wasserleitung angebracht und bilden ein Befestigungselement für die Wasserleitung.

Das Dämmschalenelement 13 mit der ersten Dämmschale 14 und der zweiten Dämmschale 15 bildet mit dem thermisch leitfähigen Element 8 mit den beiden Teilschalen 9, 10 ein Kompositbauteil zum Einhausen einer Wasserleitung. Das thermisch leitfähige Element ist vorliegend konfiguriert, um mit der Umfangswandung 7 der Kaltwasserleitung 1 in thermischen Kontakt zu stehen und bildet einen Außenumfangsabschnitt 23 des Kompositbauteils. Der Außenumfangsabschnitt 23 des Kompositbauteils steht zum Wärmeaustausch, vorliegend über die Kelbeschicht 17, in Kontakt mit der Innenwandung 5 des Schachtes 4.

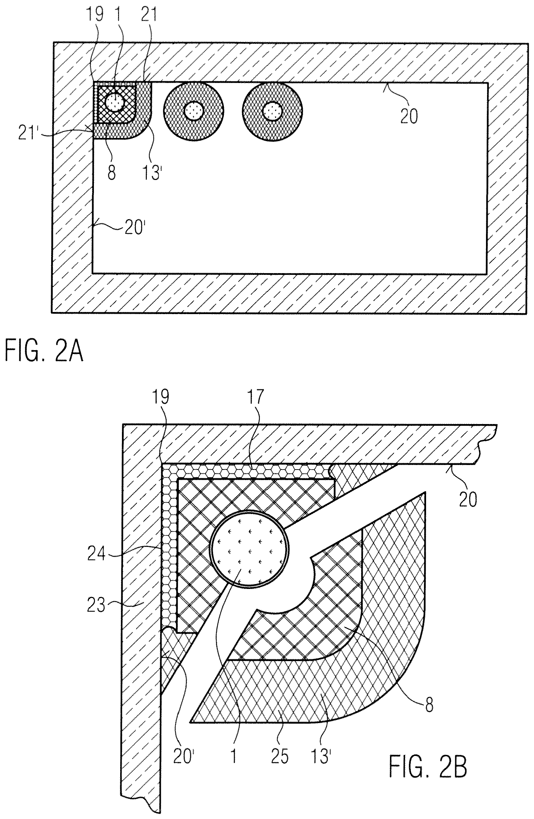

Sowohl das Kompositbauteil aus dem Beispiel in Figuren 1A und B als auch das Kompositbauteil aus den Figuren 2A und B weist in seiner Querschnittsrichtung eine im Wesentlichen zylindrische Form auf. Das Dämmschalenelement 13 weist bei dem Beispiel in Figuren 1A und B eine U-förmige Form auf und bei dem Beispiel aus den Figuren 2A und B eine V-förmige Form auf. Vorliegend ist die erste Dämmschale 14 aneinander anliegend und unverlierbar mit der ersten Teilschale 9 des thermisch leitfähigen Elementes 8, und die zweite Dämmschale 15 aneinander anliegend und unverlierbar mit der zweiten Teilschale 10 des thermisch leitfähigen Elementes 8 z. B. durch eine Klebeverbindung oder durch eine Mehrkomponentenspritzgusstechnik verbunden.

Das Kompositbauteil ist im vorliegenden Fall zweiteilig aus zwei Kompositelementen 24, 25 aufgebaut. Es ist nicht notwendig, dass beide Elemente des Kompositbauteils Kompositelemente sind. Es reicht aus, dass lediglich das in Figuren 1A und B zum Hohlraum 6 hin gesehen innere Element ein Kompositelement (erstes Kompositelement) ist. Dass Element zwischen der Kaltwasserleitung 1 und der Wand 5 kann auch lediglich aus dem thermisch leitfähigen Material aufgebaut sein. Die beiden Elemente 24, 25 des Kompositbauteils nehmen die Kaltwasserleitung in deren Längsrichtung in sich auf. Das thermisch leitfähige Element ist vorliegend. Zur besseren thermischen Leitfähigkeit und zur mechanischen Verbindung ist bei dem Ausführungsbeispiel eine Klebeschicht 17 als Verbindungsmaterial zwischen dem thermisch leitfähigen Element 8 und dem massiven Bauteil hoher Wärmekapazität vorgesehen. Vorteilhafterweise sind die entsprechenden Anlageflächen an dem massiven Bauteil hoher Wärmekapazität, d.h. vorliegend der Innenwandung 5 und die entsprechende Fläche an dem thermisch leitfähigen Element 8 derart ausgebildet, dass diese vollflächig aneinander anliegen können. Dies kann, wie im vorliegenden Beispiel dargestellt, eine planare Ausgestaltung sein. Mittels der Klebeschicht 17 kann nicht nur eine bessere thermische Leitfähigkeit zwischen der Wand 5 und dem thermisch leitfähigen Element 8 erreicht werden, vielmehr kann hiermit auch das thermisch leitfähige Element 8 an dem massiven Bauteil hoher Wärmekapazität befestigt werden. Insbesondere kann somit die erste Kompositteilschale aus der ersten Dämmschale 14 und der ersten Teilschale 9 an der Innenwandung 5 befestigt werden. Der gleiche Kleber, wie für die Klebeschicht 17 verwendet, kann auch verwendet werden um die zweite Kompositschale mit der ersten Kompositschale zu verbinden. Alternativ dazu können die beiden Elemente auch mittels einer Quetschhalterung wie beispielsweise eines U-förmigen Befestigungsstreifens, der an die Wand angebracht wird, befestigt werden.

Die in dem Ausbildungsbeispiel aus Figur 1A dargestellte Warmwasserleitungen 2, 3 sind vorliegend vollumfänglich jeweils von einem Dämmelement 18 umgeben. Das Material des Dämmelement 18 kann das gleiche Material wie das des Dämmschalenelements 13 sein. Ein solches Dämmelement 18 kann beispielsweise aus einem Dämmmaterialrohr gebildet werden, das aus einem Kunststoffschaum geformt und flexibel ist, damit dieses Rohr, solange es in der Längsrichtung einen Schnitt aufweist, um die Warmwasserleitung 2, 3 herum gelegt werden kann. Diese Kunststoffrohrelemente als Dämmelement sind im Bereich der Wasserleitungstechnik allgemein bekannt. Durch das Dämmelement 18 wird gewährleistet, dass die Warmwasserleitung nicht im thermischen Kontakt mit den Schachtwandungen steht und möglichst wenig Wärme in den Hohlraum 6 des Schachts abgegeben wird.

Das Dämmschalenelement 13, das das thermisch leitfähige Element 8 der Kaltwasserleitung 1 umgibt, gewährleistet auch eine Abschirmung zu dem Hohlraum 6 des Schachts 4.

Das massive Bauteil hoher Wärmekapazität kann jedes Bauteil sein. Besonders ist die Verwendung von betonhaltigen Bauteilen bevorzugt. Alternativ kann auch ein Metallbauteil Verwendung finden. Die Temperatur dieses Bauteils ist vorzugsweise niedriger als die Temperatur des in die Kaltwasserleitung einströmenden Wassers, damit eine effiziente Kühlung möglich ist. So kann das massive Bauteil hoher Wärmekapazität beispielsweise in das Erdreich eingelassen sein, es kann ein Luftstrom an einer Rückseite an diesem vorbeigeleitet werden oder es können Öffnungen in dem massiven Bauteil hoher Wärmekapazität ausgebildet sein, durch welche ein Luftstrom oder ein Kühlfluid fließt.

In Figur 2A und B ist ein zweites Ausführungsbeispiel der vorliegenden Erfindung dargestellt.

Im Unterschied zu dem ersten Ausführungsbeispiel aus Figuren 1A und 1B ist die Kaltwasserleitung 1 in dem zweiten Ausführungsbeispiel in einer Innenecke 19 des Schachts 4 angeordnet. Das Dämmschalenelement 13' ist in diesem Fall als Eckschale (V-förmige Geometrie) vorgesehen, sodass das thermisch leitfähige Element 8 mit den zwei über die Innenecke 19 voneinander getrennten Seitenwänden 20, 20' in thermischem Kontakt steht. Das Dämmschalenelement 13 bildet demnach eine Art Gehäuse, wobei die Begrenzungsränder 21, 21' des Gehäuses flächig an der entsprechenden Seitenwand 20, 20' anliegen und das thermisch leitfähige Element 8 ansonsten vollständig innerhalb dieses Gehäuses angeordnet ist.

Das Ensemble bzw. die Einheit aus Kaltwasserleitung 1, thermisch leitfähigem Element 8 und Dämmschale 13 weist einen im Wesentlichen quadratischen Querschnitt mit einer abgerundeten Ecke auf.

Wie für das Ausführungsbeispiel gemäß Figur 1A und 1B beschrieben, sind auch die Dämmschale 13 bzw. das thermische Element 8 aus jeweils Teilschalen (einer ersten und zweiten Teilschale) bzw. Dämmschalen (einer ersten, zweiten und dritten Dämmschale) aufgebaut. Durch die Ausgestaltung des in Figur 2A und 2B dargestellten Ausführungsbeispiels kann eine höhere Wärmemenge zwischen dem in der Kaltwasserleitung 1 fließenden kalten Wasser und dem massiven Bauteil ausgetauscht werden. Der thermische Kontakt wird auch in diesem Beispiel durch die Klebeschicht 17 zwischen dem thermisch leitfähig Element 8 und den entsprechenden Wänden 20, 21 gewährleistet.

In dem Ausführungsbeispiel aus Figuren 2A, B ist, ebenfalls, wie im Ausführungsbeispiel aus Figuren 1A, B, ein zweiteiliges Kompositelement bereitgestellt, welches aus zwei Kompositschalenelementen, einem ersten zwischen der Kaltwasserleitung 1 und der Innenwandung 5 des Schachts 4 liegenden Kompositschalenelement und einem zum Hohlraum 6 hin gerichteten Kompositschalenelement aufgebaut ist.

**Bezugszeichenliste**

| | |
|---|---|
| Kaltwasserleitung | 1 |
| Warmwasserleitung | 2 |
| Warmwasserzirkulationsleitung | 3 |
| Schacht | 4 |
| Innenwandung | 5 |
| Hohlraum | 6 |
| Umfangswandlung | 7 |
| Thermisch leitfähiges Element | 8 |
| Erste Teilschale | 9 |
| Zweite Teilschale | 10 |
| Ausnehmung | 11, 12 |
| Dämmschalenelement | 13 |
| Erste Dämmschale | 14 |
| Zweite Dämmschale | 15 |
| Raum | 16 |
| Klebeschicht | 17 |
| Dämmelement | 18 |
| Innenecke | 19 |
| Seitenwand | 20, 20' |
| Begrenzungsrand | 21, 21' |
| Außenumfangsabschnitt | 23 |
| erstes (Komposit) Element | 24 |
| zweites (Komposit)Element | 25 |

## Patentansprüche

1. Wasserleitungssystem mit einer Kaltwasserleitung (1) für Trink- und Brauchwasser sowie mit einem massiven Bauteil hoher Wärmekapazität, wobei die Kaltwasserleitung (1) mit einer Dämmung zur thermischen Entkopplung umgeben ist, wobei eine Umfangswandung der Kaltwasserleitung (1) zumindest abschnittsweise in thermischen Kontakt mit dem massiven Bauteil hoher Wärmekapazität steht, wobei zwischen der Umfangswandung der Kaltwasserleitung (1) und dem massiven Bauteil ein thermisch leitfähiges Element (8) vorgesehen ist, und wobei die Dämmung eine Außenschale (13) bildet, welche einen Ausschnitt aufweist, durch welchen das thermisch leitfähige Element (8) mit dem massiven Bauteil in thermischem Kontakt steht, **dadurch gekennzeichnet, dass** das thermisch leitfähige Element (8) durch eine Innenschale gebildet wird, welche die Kaltwasserleitung (1) umgibt und zwischen der Dämmung und der Umfangswandung der Kaltwasserleitung (1) vorgesehen ist, und wobei die Innenschale ein einheitliches Element mit der Dämmung bildet.

2. Wasserleitungssystem nach Anspruch 1, **dadurch gekennzeichnet, dass** das massive Bauteil hoher Wärmekapazität zumindest eines ausgewählt aus der Gruppe der folgenden Elemente ist: Gebäudewand, Gebäudeboden, Gebäudedecke, Schachtwand (5).

3. Wasserleitungssystem nach zumindest einem der Ansprüche 1 oder 2, **dadurch gekennzeichnet, dass** das das massive Bauteil aus einem Material ausgewählt aus der Gruppe Beton, Kalksandstein, Vollziegel ist.

4. Wasserleitungssystem nach zumindest einem der vorherigen Ansprüche, **dadurch gekennzeichnet, dass** das thermisch leitfähige Element (8) mittels einem thermisch leitfähigem Verbindungsmaterial an dem massiven Bauteil befestigt ist.

5. Wasserleitungssystem nach Anspruch 4, **dadurch gekennzeichnet, dass** das leitfähige Verbindungsmaterial eine Klebeschicht (17) ist.

6. Wasserleitungssystem nach Anspruch 1, **dadurch gekennzeichnet, dass** die Außenschale derart ausgebildet ist, dass ein Gehäuse gebildet wird, welches derart an dem massiven Bauteil angebracht ist, dass das thermisch leitfähige Element (8) mit Ausnahme einer Kontaktfläche zu dem massiven Bauteil vollständig von dem Gehäuse eingehaust wird.

7. Wasserleitungssystem nach zumindest einem der vorherigen Ansprüche, **dadurch gekennzeichnet, dass** das massive Bauteil eine Innenecke aufweist, in welcher die Katwasserleitung (1) angebracht ist, wobei beide Seiten (20, 20') der Innenecke jeweils in thermischen Kontakt mit der Kaltwasserleitung (1) stehen.

8. Wasserleitungssystem nach Anspruch 6 **dadurch gekennzeichnet, dass** das Gehäuse durch eine Halbschale oder eine Eckschale gebildet wird, welches die Kaltwasserleitung (1) und das thermisch leitfähigen Element (8) umgibt, wobei die Begrenzungsränder (21, 21') des Gehäuses flächig an entsprechenden Wänden des massiven Bauteils anliegen.

9. Wasserleitungssystem nach zumindest einem der vorherigen Ansprüche, **dadurch gekennzeichnet, dass** eine Warmwasserleitung (2, 3) vorgesehen ist, welche thermisch isoliert von dem massiven Bauteil, insbesondere an diesem befestigt, vorgesehen ist.

10. Wasserleitungssystem nach Anspruch 9, **dadurch gekennzeichnet, dass** die thermische Isolierung durch eine Dämmschale (18) gewährleistet wird, welche die Warmwasserleitung (2, 3) vollumfänglich umgibt.

11. Kompositbauteil zum Einhausen einer Wasserleitung mit einer Dämmschale (13) aus einem thermisch isolierendem Material und einem thermisch leitfähigen Element (8), wobei das thermisch leitfähige Element (8) konfiguriert ist, um mit einem Umfangswandungsabschnitt der Wasserleitung in thermischen Kontakt zu stehen und einen Außenumfangsabschnitt des Kompositbauteils bildet, wobei das Kompositbauteil zumindest ein erstes, mit einem massiven Bauteil hoher Wärmekapazität kontaktierbares Element (24) und ein zweites Element (25) aufweist, wobei das erste und das zweite Element (24; 25) angepasst ausgebildet sind, die Wasserleitung (1) zwischen sich aufnehmen **dadurch gekennzeichnet, dass** zumindest eines des ersten Elementes (24) und/oder des zweiten Elementes (25) zumindest einen Teil der Dämmschale (13) und einen Teil des thermisch leitfähigen Elementes (8) enthält und ein Kompositelement bildet.

12. Kompositbauteil nach Anspruch 11, **dadurch gekennzeichnet, dass** dieses in seiner Querschnittsrichtung eine im Wesentlichen zylindrische Form aufweist.

13. Kompositbauteil nach zumindest einem der Ansprüche 11 oder 12, **dadurch gekennzeichnet, dass** das thermisch leitfähige Element (8) die Wasserleitung (1) konturabbildend in sich aufnehmen kann.

14. Kompositbauteil nach zumindest einem der Ansprüche 11 bis 13, **dadurch gekennzeichnet, dass** eine Klebeschicht (17) aus einem thermisch leitfähigen Material (9) auf dem Außenumfangsabschnitt des Kompositbauteils vorgesehen ist.

15. Kompositbauteil nach zumindest einem der Ansprüche 11 bis 14, **dadurch gekennzeichnet, dass** das thermisch leitfähige Element (8) zwischen der Wasserleitung und einem massiven Bauteil hoher Wärmekapazität, das in thermischen Kontakt mit dem Außenumfangsabschnitt des Kompositbauteils steht, vorgesehen ist.

## Claims

1. Water pipe system comprising a cold water pipe (1) for drinking and service water and comprising a solid component having a high thermal capacity, the cold water pipe (1) being surrounded by insulation for thermal decoupling, a circumferential wall of the cold water pipe (1) being in thermal contact, at least in portions, with the solid component having a high thermal capacity, a thermally conductive element (8) being provided between the circumferential wall of the cold water pipe (1) and the solid component, and the insulation forming an outer shell (13) which has a cutout through which the thermally conductive element (8) is in thermal contact with the solid component, **characterized in that** the thermally conductive element (8) is formed by an inner shell which surrounds the cold water pipe (1) and is provided between the insulation and the circumferential wall of the cold water pipe (1), and the inner shell forming a unitary element with the insulation.

2. Water pipe system according to claim 1, **characterised in that** the solid component having a high thermal capacity is at least one selected from the group of the following elements: building wall, building floor, building ceiling, or shaft wall (5).

3. Water pipe system according to at least one of claims 1 or 2, **characterised in that** the solid component is made from a material selected from the group of concrete, sand-lime brick, or solid brick.

4. Water pipe system according to at least one of the preceding claims, **characterised in that** the thermally conductive element (8) is fastened to the solid component by means of a thermally conductive connecting material.

5. Water pipe system according to claim 4, **characterised in that** the conductive connecting material is an adhesive layer (17).

6. Water pipe system according to claim 1, **characterised in that** the outer shell is designed in such a way that a housing is formed, which housing is attached to the solid component in such a way that the thermally conductive element (8) is completely enclosed by the housing except for a contact surface to the solid component.

7. Water pipe system according to at least one of the preceding claims, **characterised in that** the solid component has an inner corner in which the cold water pipe (1) is attached, the two sides (20, 20') of the inner corner each being in thermal contact with the cold water pipe (1).

8. Water pipe system according to claim 6, **characterised in that** the housing is formed by a half-shell or a corner shell and surrounds the cold water pipe (1) and the thermally conductive element (8), the boundary edges (21, 21') of the housing lying flat against corresponding walls of the solid component.

9. Water pipe system according to at least one of the preceding claims, **characterised in that** a hot water pipe (2, 3) is provided which is thermally insulated from the solid component, in particular fastened thereto.

10. Water pipe system according to claim 9, **characterised in that** the thermal insulation is ensured by an insulating shell (18) which completely surrounds the hot water pipe (2, 3).

11. Composite component for enclosing a water pipe, comprising an insulating shell (13) made of a thermally insulating material and a thermally conductive element (8), the thermally conductive element (8) being configured to be in thermal contact with a circumferential wall portion of the water pipe and forming an outer circumferential portion of the composite component, the composite component having at least a first element (24) that can be contacted by a solid component having a high thermal capacity, and a second element (25), the first and the second element (24; 25) being adapted to accommodate the water pipe (1) between them, **characterised in that** at least one of the first element (24) and/or the second element (25) contains at least part of the insulating shell (13) and part of the thermally conductive element (8) and forms a composite element.

12. Composite component according to claim 11, **characterised in that** it has a substantially cylindrical shape in its cross-sectional direction.

13. Composite component according to at least one of claims 11 or 12, **characterised in that** the thermally conductive element (8) can accommodate the water pipe (1) therein in a contour-mapping manner.

14. Composite component according to at least one of claims 11 to 13, **characterised in that** an adhesive layer (17) made of a thermally conductive material (9) is provided on the outer circumferential portion of the composite component.

15. Composite component according to at least one of claims 11 to 14, **characterised in that** the thermally conductive element (8) is provided between the water pipe and a solid component having a high thermal capacity, which solid component is in thermal contact with the outer circumferential portion of the composite component.

## Revendications

1. Système de conduite d'eau avec une conduite d'eau froide (1) destinée à de l'eau potable et à de l'eau industrielle et avec un élément plein à grande capacité thermique, dans lequel la conduite d'eau froide (1) est entourée par une isolation permettant un découplage thermique, dans lequel une paroi périphérique de la conduite d'eau froide (1) est, au moins par sections, en contact thermique avec l'élément plein à grande capacité thermique, dans lequel un élément thermiquement conducteur (8) est fourni entre la paroi périphérique de la conduite d'eau froide (1) et l'élément plein, et dans lequel l'isolation forme une coque extérieure (13) présentant une découpe à travers laquelle l'élément thermiquement conducteur (8) est en contact thermique avec l'élément plein, **caractérisé en ce que** l'élément thermiquement conducteur (8) est formé d'une coque intérieure entourant la conduite d'eau froide (1) et est fournie entre l'isolation et la paroi périphérique de la conduite d'eau froide (1), et dans lequel la coque intérieure forme avec l'isolation un élément homogène.

2. Système de conduite d'eau selon la revendication 1, **caractérisé en ce que** l'élément plein à grande capacité thermique est au moins un élément choisi parmi le groupe comprenant les éléments ci-après : mur de bâtiment, plancher de bâtiment, plafond de bâtiment, paroi de puits (5).

3. Système de conduite d'eau selon la revendication 1 ou 2, **caractérisé en ce que** l'élément plein est en un matériau choisi parmi le groupe comprenant le béton, le grès calcaire et la brique pleine.

4. Système de conduite d'eau selon au moins l'une quelconque des revendications précédentes, **caractérisé en ce que** l'élément thermiquement conducteur (8) est fixé à l'élément plein au moyen d'un matériau de liaison thermiquement conducteur.

5. Système de conduite d'eau selon la revendication 4, **caractérisé en ce que** le matériau de liaison conducteur est une couche adhésive (17).

6. Système de conduite d'eau selon la revendication 1, **caractérisé en ce que** la coque extérieure est réalisée de telle manière qu'une enveloppe est formée, qui est appliquée au niveau de l'élément plein de telle manière que l'élément thermiquement conducteur (8) est complètement entouré par l'enveloppe à l'exception d'une surface en contact avec l'élément plein.

7. Système de conduite d'eau selon au moins l'une quelconque des revendications précédentes, **caractérisé en ce que** l'élément plein présente un coin intérieur au sein duquel est appliquée la conduite d'eau froide (1), dans lequel les deux côtés (20, 20') du coin intérieur sont respectivement en contact thermique avec la conduite d'eau froide (1).

8. Système de conduite d'eau selon la revendication 6, **caractérisé en ce que** l'enveloppe est formée grâce à une demi-coque ou une coque d'angle qui entoure la conduite d'eau froide (1) et l'élément thermiquement conducteur (8), dans lequel les bords de délimitation (21, 21') de l'enveloppe reposent à plat au niveau de parois correspondantes de l'élément plein.

9. Système de conduite d'eau selon au moins l'une quelconque des revendications précédentes, **caractérisé en ce qu'**une conduite d'eau chaude (2, 3) isolée thermiquement par rapport à l'élément plein, en particulier fixée à celui-ci, est fournie.

10. Système de conduite d'eau selon la revendication 9, **caractérisé en ce que** l'isolation thermique est assurée grâce à une coque isolante (18) qui entoure la conduite d'eau chaude (2, 3) sur toute sa périphérie.

11. Élément composite permettant d'entourer une conduite d'eau avec une coque isolante (13) en un matériau thermiquement isolant et un élément thermiquement conducteur (8), dans lequel l'élément thermiquement conducteur (8) est configuré pour être en contact thermique avec une section de paroi périphérique de la conduite d'eau et forme une section périphérique extérieure de l'élément composite, dans lequel l'élément composite présente au moins un premier élément (24), pouvant être mis en contact avec un élément plein à grande capacité thermique, et un second élément (25), dans lequel les premier et second éléments (24 ; 25) sont réalisés de manière adaptée pour accueillir entre eux la conduite d'eau (1), **caractérisé en ce qu'**au moins un parmi le premier élément (24) et/ou le second élément (25) contient au moins une partie de la coque isolante (13) et une partie de l'élément thermiquement conducteur (8) et forme un élément composite.

12. Élément composite selon la revendication 11, **caractérisé en ce qu'**il présente une forme essentiellement cylindrique dans le sens de sa coupe transversale.

13. Élément composite selon la revendication 11 ou 12, **caractérisé en ce que** l'élément thermiquement conducteur (8) peut accueillir la conduite d'eau (1) en suivant son contour.

14. Élément composite selon au moins l'une quelconque des revendications 11 à 13, **caractérisé en ce qu'**une couche adhésive (17) en un matériau thermiquement conducteur (9) est fournie sur la section périphérique extérieure de l'élément composite.

15. Élément composite selon au moins l'une quelconque des revendications 11 à 14, **caractérisé en ce que** l'élément thermiquement conducteur (8) est fourni entre la conduite d'eau et un élément plein à grande capacité thermique qui est en contact thermique avec la section périphérique extérieure de l'élément composite.
